# EUROPÄISCHE PATENTSCHRIFT

(11) **EP 4 457 456 B1**
(45) Veröffentlichungstag und Bekanntmachung des Hinweises auf die Patenterteilung: **20.05.2026**
(21) Anmeldenummer: 23703174.5
(22) Anmeldetag: 01.02.2023
(51) Int. Cl.: F16K 37/00, F15B 1/02, F15B 15/14, F15B 15/28, F15B 20/00, E21B 33/035, F16K 31/363, F16K 31/40

(54) **SICHERHEITSVORRICHTUNG FÜR EIN LINEAR BETÄTIGTES PROZESSVENTIL**
SAFETY DEVICE FOR A LINEARLY ACTUATED PROCESS VALVE
DISPOSITIF DE SÉCURITÉ POUR VANNE DE PROCESS À ACTIONNEMENT LINÉAIRE

(30) Priorität: 07.02.2022 DE 102022201230
(43) Veröffentlichungstag der Anmeldung: 06.11.2024
(73) Patentinhaber: Robert Bosch GmbH, 70442 Stuttgart (DE)
(72) Erfinder: KUBACKI, Markus, 97209 Veitshoechheim (DE); HENDRIX, Gottfried, 97737 Gemuenden (DE); ORTH, Alexandre, 97265 Hettstadt (DE)
(86) Internationale Anmeldenummer: PCT/EP2023/052432
(87) Internationale Veröffentlichungsnummer: WO 2023/148212

(56) Entgegenhaltungen:
- EP-A1- 2 989 360
- WO-A1-2018/192747
- WO-A1-2018/192749
- WO-A2-02/081932
- US-A- 4 651 970
- US-A1- 2002 124 889
- US-A1- 2007 095 411
- US-A1- 2016 245 425

## Beschreibung

Die vorliegende Erfindung betrifft eine Sicherheitsvorrichtung für ein linear betätigtes Prozessventil und ein System umfassend die Sicherheitsvorrichtung.

### Hintergrund der Erfindung

Im Rahmen von Erdöl- oder Erdgasförderanlagen, die auf See in großen Tiefen betrieben werden, kommen Prozessventile zum Einsatz, mit denen der Volumenstrom des zu fördernden Mediums geregelt oder abgesperrt werden kann. Diese Prozessventile werden mittels elektrohydraulischer Stellantriebe, wie beispielsweise einem hydrostatischen Linearaktor, betätigt. Dieser kann einen hydraulischen Zylinder mit einer oder mehreren Federn enthalten, die bei Ausfall des hydraulischen Antriebs den Kolben des hydraulischen Zylinders in eine vorbestimmte Position bewegen. Dadurch wird das Prozessventil im Fehlerfall in eine sichere Stellung gebracht.

DE 10 2020 200 263 A1 zeigt einen hydrostatischen Linearaktor, der in einem Notfall eine Zugkraft auf ein sicherheitsrelevantes Bauteil ausübt, wobei die Zugkraft zunächst durch eine sich entspannende Notfeder erzeugt wird. In einem letzten Teil der Bewegung wird über eine wegabhängige Steuerung ein Hydrospeicher zugeschaltet, dessen Druckmittel in einen Zylinderraum gefördert wird, der auf einen Kolben wirkt, an den das Bauteil gekoppelt ist.

EP 2 989 360 A1 offenbart ein System, umfassend ein ferngesteuertes Fahrzeug, ein Federpaketgehäuse, einen Fahrzeugadapter und einen Verbindungsadapter, der sich lösbar mittels einer Schnellkupplungsvorrichtung mit dem Federpaketgehäuse verbinden lässt.

US 2002/124889 A1 betrifft einen hydraulischen Unterwasserantrieb und -verfahren für einen Absperrschieber.

Aus US 2016/245425 A1 ist ein Stellantrieb für ein Ventil in einer Unterwasserinstallation bekannt.

WO 02/081932 A2 offenbart einen Ventilstellantrieb mit einem Sicherheitsmechanismus. Der Antrieb ist hydraulisch betätigt und schließt ein Ventil federunterstützt bei Druckverlust (Fail-Closed).

US 4 651 970 A betrifft eine Antriebsanordnung mit einer Hilfsenergiespeichervorrichtung in Form einer Spiralfeder.

Nachteilig an einem Linearaktor gemäß DE 10 2020 200 263 A1 ist dessen erhöhtes Gewicht aufgrund der in dem Aktuator integrierten Sicherheitskomponenten (Federsysteme, zusätzliche hydraulische Bauteile). Dies erschwert den Austausch eines defekten Linearaktors in großen Tiefen mittels eines Unterwasserfahrzeugs (Remote Operated Vehicle - ROV).

### Offenbarung der Erfindung

Erfindungsgemäß werden eine Sicherheitsvorrichtung für ein linear betätigtes Prozessventil und ein System, das die Sicherheitsvorrichtung umfasst, mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung stellt eine kompakte und einfache Sicherheitsvorrichtung für linear betätigte Prozessventile als separates Modul bereit, das über rein mechanische Eigenschaften verfügt (d.h. keine elektrische, hydraulische oder pneumatische Antriebseinheit beinhaltet). Die Sicherheitsvorrichtung kann mittels mechanischer Standardschnittstellen zwischen einem Linearaktor und einem Prozessventil angeordnet sein.

Die Sicherheitsvorrichtung für ein linear betätigtes Prozessventil umfasst ein Gehäuse und eine Kolbenstange, die in dem Gehäuse linear verschiebbar gelagert und mit dem Prozessventil verbindbar ist. Die Kolbenstange der Sicherheitsvorrichtung kann beispielsweise mittels einer mechanischen Verbindung mit einer Absperreinrichtung des Prozessventils verbunden werden. Bei der mechanischen Verbindung kann es sich beispielsweise um eine mittels einer zweiten mechanischen Schnittstelle hergestellten Verbindung, eine Verschraubung oder Verschweißung handeln. Bevorzugt handelt es sich bei dem Prozessventil um ein Scheibenventil, das eine Scheibe als Absperreinrichtung nutzt.

Weiters enthält die Sicherheitsvorrichtung einen Kolben, der mit der Kolbenstange verbunden ist, sowie mindestens eine Feder, die zwischen dem Kolben und einer Stirnseite des Gehäuses eingespannt ist. Dies bedeutet, dass die Kolbenstange mit dem Kolben durch die Federkraft in einer vorbestimmten Position (Endlage) gehalten wird, solange keine externe Kraft entgegen und größer der Federkraft auf die Kolbenstange wirkt. Bevorzugt befindet sich ein mit der Sicherheitsvorrichtung verbundenes Prozessventil bei dieser Endlage der Kolbenstange in einer sicheren Stellung. Besonders bevorzugt ist die sichere Stellung eine geschlossene Position des Prozessventils.

Ferner umfasst die Sicherheitsvorrichtung eine erste mechanische Schnittstelle, mittels derer die Sicherheitsvorrichtung mit einem Linearaktor lösbar verbindbar ist. Bevorzugt kann die erste und/oder zweite mechanische Schnittstelle einen Schnellverschluss, insbesondere einen Drehverschluss (d.h. eine durch Drehen eines der beteiligten Bauteile, vorzugsweise um höchstens 360°, höchstens 180°, höchsten 90° oder höchstens 45° verschließbaren Verbindung), z.B. einen Bajonettverschluss oder einen Schnellverschluss nach EN ISO 13628-8, "Linear (push) interface", Typ A oder Typ C enthalten. Dieser Schnellverschluss enthält auf einer Seite einen Flansch mit Aussparungen, der um einen ersten Schaft angeordnet ist. In die Aussparungen des Flansches können klauenförmige Vorsprünge eines zweiten Schafts einer Gegenseite axial eingeführt und die beiden Seiten des Schnellverschlusses durch Drehen des zweiten Schafts um 45° im Uhrzeigersinn miteinander verbunden werden. Durch die Drehung des zweiten Schafts um 45° im Uhrzeigersinn liegen dessen klauenförmige Vorsprünge axial und radial an dem Flansch des ersten Schafts an, so dass eine formschlüssige Verbindung der beiden Seiten des Schnellverschlusses hergestellt wird.

Die Sicherheitsvorrichtung kann eine Seite des oben beschriebenen Schnellverschlusses aufweisen, und ein Linearaktor, mit dem die Sicherheitsvorrichtung verbindbar ist, kann die zweite Seite des Schnellverschlusses aufweisen.

Die erste mechanische Schnittstelle ermöglicht es, einen mit der Sicherheitsvorrichtung verbundenen Linearaktor mit einem ROV zu tauschen, ohne dass die Sicherheitsvorrichtung ausgebaut oder geöffnet werden muss. Dies führt zu einer deutlichen Vereinfachung bei der Wartung und Montage von Linearaktoren, insbesondere in großen Tiefen.

Die Sicherheitsvorrichtung bietet einen sehr einfachen und kompakten Fail-Safe-Mechanismus, der auf bewährten Federn basiert und keinen elektrischen, pneumatischen oder hydraulischen Antrieb benötigt. Durch die Federkraft der mindestens einen Feder in der Sicherheitsvorrichtung wird das Prozessventil automatisch in eine vorher definierte Position (z.B. geöffnet oder geschlossen) gebracht, wenn die Betätigungskraft abfällt (z.B. beim Fehler eines Antriebs, Stromausfall, Deaktivierung oder Ausbau des Aktuators). Der modulare Aufbau der Komponenten, der die Sicherheitsvorrichtung getrennt von einem Linearaktor vorsieht, kann zur Vereinfachung der Konstruktion neuer oder zur Nachrüstung bestehender Anlagen genutzt werden.

Gemäß einer bevorzugten Ausführungsform wird umfasst die Sicherheitsvorrichtung ein Vorspannmittel, das dazu eingerichtet ist die mindestens eine Feder der Sicherheitsvorrichtung unabhängig von einer Bewegung der Kolbenstange vorzuspannen. Dies ermöglicht es, die Kolbenstange zum Öffnen des Prozessventils mit einer geringeren Kraft zu betätigen, da die Federkraft nicht überwunden werden muss. Folglich kann ein mit der Sicherheitsvorrichtung verbindbarer Linearaktor zum Betätigen des Prozessventils kleiner ausgeführt werden.

Das Vorspannmittel kann vorzugsweise einen Schaft aufweisen, der auf den Kolben wirkt und eine Kraft auf die Feder ausübt. Dieser stellt ein einfaches und kompaktes Mittel zur Bereitstellung der Vorspannkraft dar.

Der Schaft kann sich vorzugsweise durch das Gehäuse nach außen erstrecken, um von außen betätigbar zu sein. Dadurch ist kein Krafterzeugungsmittel, wie beispielsweise ein hydraulischer Antrieb, innerhalb der Sicherheitsvorrichtung notwendig.

Der Schaft hat vorzugsweise eine dritte mechanische Schnittstelle zur lösbaren Verbindung mit einem externen Antrieb, beispielsweise mit einem hydraulischen Antrieb des mit der Sicherheitsvorrichtung verbindbaren Linearaktors.

Vorzugsweise ist das Gehäuse der Sicherheitsvorrichtung mit einer Druckflüssigkeit gefüllt. Die Druckflüssigkeit dient bevorzugt zum Widerstand gegen einen auf die Sicherheitsvorrichtung wirkenden Außendruck sowie zum Korrosionsschutz und der Schmierung der Elemente der Sicherheitsvorrichtung. Bei der Druckflüssigkeit kann es sich beispielsweise um Hydrauliköl handeln.

Erfindungsgemäß umfasst die Sicherheitsvorrichtung eine Druckkompensationsvorrichtung, die dazu eingerichtet ist einen Druckausgleich zwischen einer Umgebung und einem Innenraum der Sicherheitsvorrichtung zu bewirken. Bevorzugt ist die Druckkompensationsvorrichtung ein Membranspeicher oder ein Blasenspeicher, der eine Fluidverbindung mit einer Gehäuseöffnung hat. Besonders bevorzugt ist die Druckkompensationsvorrichtung ein Blasenspeicher. Der Blasenspeicher kann mit einer flexiblen Wand ausgeführt sein, die ein vorgebbares Blasenspeichervolumen einschließt und sich axial und radial in Reaktion auf den im Inneren des Speichers vorherrschenden Druck bewegen kann. Die flexible Wand des Blasenspeichers kann z. B. aus einem Elastomer gefertigt und fluiddicht und beständig hinsichtlich eines Kontakts mit Seewasser unter hohem Druck ausgeführt sein.

Die Druckkompensationsvorrichtung ist insbesondere bei Einsatz der Sicherheitsvorrichtung in Unterwasseranwendungen vorteilhaft.

Bevorzugt ist die Druckkompensationsvorrichtung dazu eingerichtet einen Druck im Innenraum der Sicherheitsvorrichtung in einem Bereich zwischen Umgebungsdruck und 10 bar oberhalb des Umgebungsdrucks einzustellen. Dies kann beispielsweise mittels einer Feder erfolgen, welche eine an der Druckkompensationsvorrichtung angebrachte Membran vorspannt. Mittels der Vorspannkraft der Feder kann der Druck im Innenraum der Druckkompensationsvorrichtung auf einen gewünschten Wert oberhalb des Umgebungsdrucks eingestellt werden.

Erfindungsgemäß ist die Druckkompensationsvorrichtung in der Kolbenstange angeordnet. Dies führt zu einer besonders platzsparenden Anordnung der Druckkompensationsvorrichtung im Innenraum der Sicherheitsvorrichtung. Die Druckkompensationsvorrichtung steht vorzugsweise über eine Bohrung in der Kolbenstange mit der Umgebung außerhalb des Gehäuses (z.B. Seewasser) in Verbindung.

Vorzugsweise umfasst die Sicherheitsvorrichtung ferner eine zweite mechanische Schnittstelle, mittels derer sie mit dem Prozessventil verbindbar ist. Diese erlaubt es, die Sicherheitsvorrichtung am Prozessventil zu trennen und zu tauschen, sowie mehrere Sicherheitsvorrichtungen in einer Reihenschaltung miteinander zu verbinden, um die Kraft zum Schließen des Prozessventils zu erhöhen.

Bevorzugt umfasst die Sicherheitsvorrichtung ferner mindestens einen Sensor, der dazu eingerichtet ist, die Position des Kolbens und/oder der Kolbenstange zu detektieren.

Vorzugsweise enthält die Sicherheitsvorrichtung eine Anzeigevorrichtung, die dazu eingerichtet ist, die Position des Kolbens und/oder der Kolbenstange auf einer Außenseite des Gehäuses anzuzeigen. Die Anzeigevorrichtung kann eine physische Anzeige (z. B. einen beweglichen Pfeil) enthalten, welche die Position des Kolbens und/oder der Kolbenstange auf der Außenseite des Gehäuses anzeigt. Die physische Anzeige kann mechanisch mit dem Kolben und/oder der Kolbenstange verbunden sein. Die Anzeigevorrichtung kann von einem ROV verwendet und/oder über eine Kamera überwacht werden.

Das erfindungsgemäße System zur Betätigung eines Prozessventils umfasst mindestens einen Linearaktor und eine oder mehrere Sicherheitsvorrichtungen wie vorstehend beschrieben. Die eine oder eine der mehreren Sicherheitsvorrichtungen ist mittels der ersten (und ggf. zweiten) mechanischen Schnittstelle mit dem Linearaktor verbunden.

Bevorzugt umfasst das System mehrere Sicherheitsvorrichtungen, die in Reihe geschaltet sind, um die Federkraft zum Schließen des Prozessventils zu erhöhen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen ausführlich beschrieben.

### Figurenbeschreibung

Figuren 1a und 1b zeigen eine erste bevorzugte Ausführungsform einer nicht erfindungsgemäßen Sicherheitsvorrichtung jeweils in räumlicher Außenansicht und im Längsschnitt;
Figur 2 zeigt eine zweite bevorzugte Ausführungsform der erfindungsgemäßen Sicherheitsvorrichtung im Längsschnitt;
Figuren 3a und 3b zeigen eine schematische Darstellung der zweiten und einer dritten bevorzugte Ausführungsform der Sicherheitsvorrichtung jeweils in entspanntem und vorgespanntem Zustand im Längsschnitt;
Figur 4 zeigt einen hydraulischen Schaltplan eines Linearaktors gemäß einer bevorzugten Ausführungsform des erfindungsgemäßen Systems;
Figur 5 zeigt ein Beispiel für eine mechanische Schnittstelle zwischen einem Linearaktor und einer Sicherheitsvorrichtung gemäß einer bevorzugten Ausführungsform des erfindungsgemäßen Systems im Längsschnitt; und
Figur 6 zeigt einen Linearaktor und eine Sicherungsvorrichtung gemäß einer bevorzugten Ausführungsform des erfindungsgemäßen Systems in einer räumlichen Außenansicht.

In den Figuren sind gleiche Elemente mit gleichen Bezugszeichen versehen. Daher wird gegebenenfalls auf eine wiederholende Beschreibung verzichtet.

### Detaillierte Beschreibung der Zeichnung

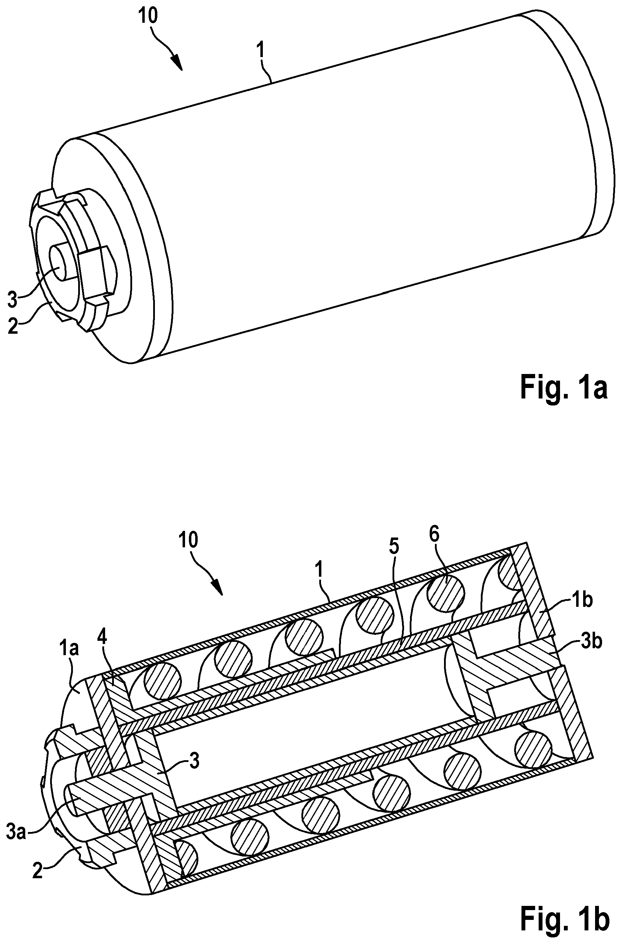

Figuren 1a und 1b zeigen eine erste bevorzugte Ausführungsform einer nicht erfindungsgemäßen

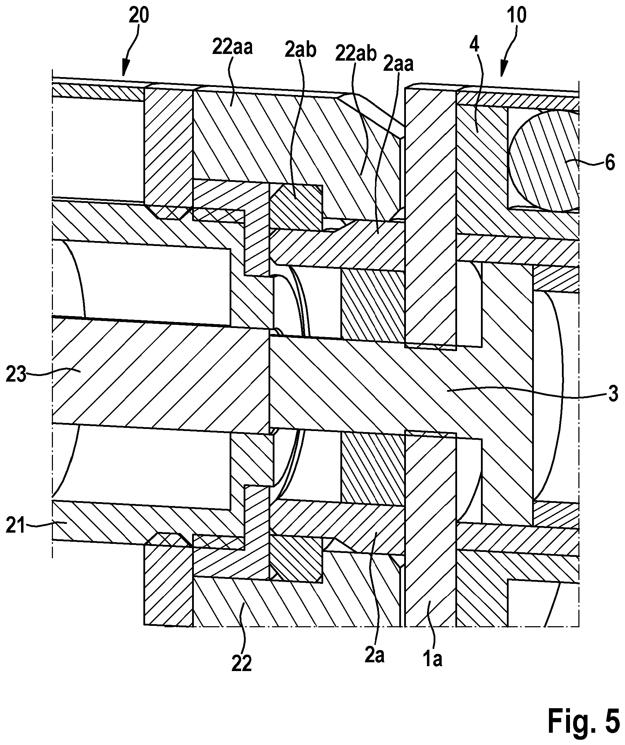

Sicherheitsvorrichtung 10. Figur 1a zeigt diese in einer räumlicher Außenansicht und Figur 1b zeigt sie im Längsschnitt. Die dargestellte Sicherheitsvorrichtung 10 umfasst ein Gehäuse 1, an dessen erster Stirnseite 1a eine mechanische Schnittstelle 2 angebracht ist. Die Schnittstelle 2 wird nachfolgend in Verbindung mit Figur 5 genauer beschrieben.

Das Gehäuse 1 ist mit einer Druckflüssigkeit, wie beispielsweise Hydrauliköl, gefüllt. In dem Gehäuse 1 ist eine Kolbenstange 3 in einer Buchse 5 axial verschiebbar gelagert. Die Kolbenstange 3 ist hier beispielhaft hohl ausgeführt und enthält zweckmäßigerweise Öffnungen zum Durchtreten der Druckflüssigkeit (nicht dargestellt). Die Buchse 5 weist ebenfalls Öffnungen zum Durchtreten der Druckflüssigkeit auf (nicht dargestellt). Die Kolbenstange 3 ist mit einem Kolben 4 verbunden.

Im Inneren des Gehäuses 1 ist weiters eine Feder 6 angeordnet, die die Kolbenstange 3 umgibt und zwischen dem Kolben 4 und einer zweiten Stirnseite 1b des Gehäuses 1 eingespannt ist. Enden 3a, 3b der Kolbenstange 3 treten jeweils durch die Stirnseiten 1a, 1b des Gehäuses hindurch.

In Figur 1b ist die Sicherheitsvorrichtung 10 in einem Zustand gezeigt, in dem das Ende 3a der Kolbenstange 3 nicht mit einer externen Kraft beaufschlagt ist. Folglich drückt die Feder 6 den Kolben 4 gegen die Stirnseite 1a des Gehäuses 1, wodurch die Kolbenstange 3 mit dem Kolben 4 in eine vorbestimmte Position (Endlage) gebracht wird. Diese Endlage der Kolbenstange 3 führt bei Verbindung der Kolbenstange 3 an ihrem Ende 3b mit einem Prozessventil dazu, das letzteres in eine sichere Stellung gebracht wird. Vorzugsweise handelt es sich dabei um die geschlossene Position des Prozessventils.

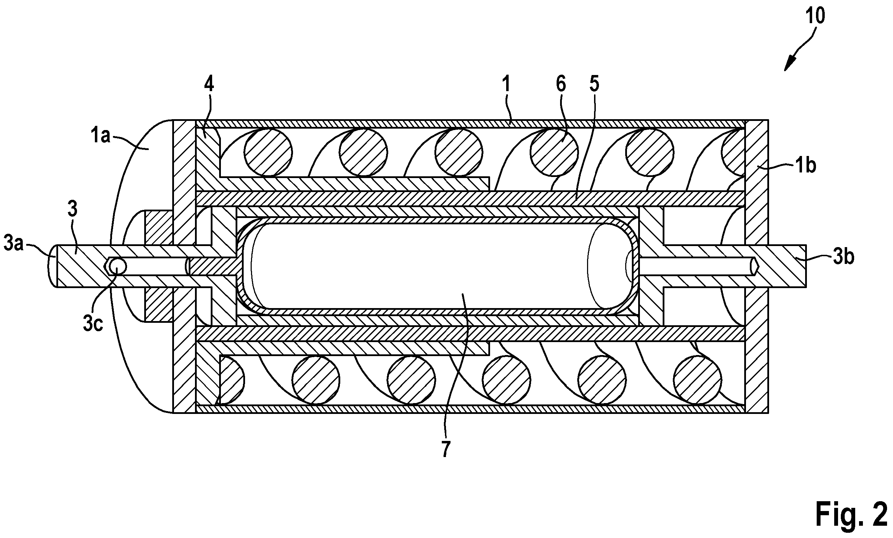

Figur 2 zeigt eine zweite bevorzugte Ausführungsform der erfindungsgemäßen Sicherheitsvorrichtung im Längsschnitt. Zusätzlich zu den in Figur 1b beschriebenen Elementen der ersten Ausführungsform des Sicherheitsventils umfasst die zweite Ausführungsform gemäß der Erfindung eine Druckkompensationsvorrichtung 7, die insbesondere für den Einsatz der Sicherheitsvorrichtung in Unterwasseranwendungen zweckmäßig ist. Die in Figur 2 dargestellte Druckkompensationsvorrichtung 7 ist im Inneren der Kolbenstange 3 angeordnet und als Blasenspeicher 7 ausgeführt. Die Positionierung des Blasenspeichers 7 in der Kolbenstange 3 führt zu einer besonders platzsparenden Anordnung der Druckkompensationsvorrichtung 7. Der Blasenspeicher 7 steht über eine Bohrung 3c in der Kolbenstange 3 mit der Umgebung, z.B. dem Seewasser, in Verbindung. Der Blasenspeicher 7 kann mit einer flexiblen Wand ausgeführt sein, die ein vorgebbares Blasenspeichervolumen einschließt und sich axial und radial in Reaktion auf den im Inneren der Kolbenstange 3 vorherrschenden Druck bewegen kann. Die flexible Wand des Blasenspeichers 7 kann z.B. aus einem Elastomer gefertigt und fluiddicht und beständig hinsichtlich eines Kontakts mit Seewasser unter hohem Druck ausgeführt sein. Bei Normaldruck, d.h. solange sich die Sicherheitsvorrichtung über Wasser befindet, ist der Speicher zweckmäßiger Weise leer und weist ein kleinstmögliches Volumen auf. Beim Untertauchen unter die Wasseroberfläche füllt er sich bei steigendem Außendruck mit Wasser und dehnt sich dementsprechend aus, was zu einem Druckausgleich zwischen Innendruck und Außendruck führt.

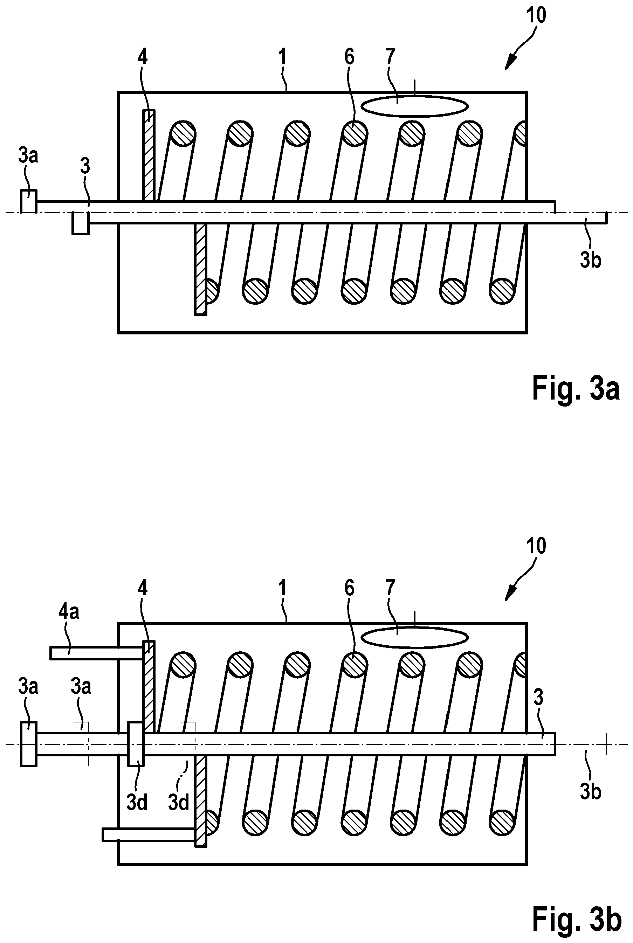

Figuren 3a und 3b zeigen eine schematische Darstellung der zweiten und einer dritten bevorzugte Ausführungsform der Sicherheitsvorrichtung 10 im Längsschnitt.

Figur 3a zeigt schematisch die Position der Bauteile der Sicherheitsvorrichtung 10 gemäß der zweiten bevorzugten Ausführungsform bei entspannter Feder 6 (oberhalb der strichpunktierten Mittellinie) und bei vorgespannter Feder 6 (unterhalb der stichpunktierten Mittellinie). Wird das Ende 3a der Kolbenstange 3 nicht mit einer externen Kraft beaufschlagt, so befindet sich die Feder 6 in einem entspannten Zustand (oberhalb der strichpunktierten Mittellinie dargestellt) und drückt über den Kolben 4 die Kolbenstange 3 in die Endlage.

Wird das Ende 3a der Kolbenstange 3 hingegen mit einer externen Kraft beaufschlagt, so verschiebt sich diese in eine Richtung entgegen der Wirkkraft der Feder 6 und drückt mit dem Kolben 4 die Feder 6 zusammen, so dass diese vorgespannt wird (unterhalb der strichpunktierten Mittellinie dargestellt). In einer solchen Position der Kolbenstange 3 befindet sich ein mit der Kolbenstange 3 an ihrem Ende 3b verbundenes Prozessventil in einer Betriebsstellung, bevorzugt in einer offenen Stellung.

Figur 3b zeigt schematisch die Position der Bauteile der Sicherheitsvorrichtung 10 gemäß einer dritten bevorzugten Ausführungsform bei entspannter Feder 6 (oberhalb der strichpunktierten Mittellinie) und bei vorgespannter Feder 6 (unterhalb der stichpunktierten Mittellinie). In der dritten Ausführungsform der erfindungsgemäßen Sicherheitsvorrichtung 10 ist der Kolben über einen Mitnehmer 3d unidirektional mit der Kolbenstange 3 verbunden. Des Weiteren erfolgt die Vorspannung der Feder 6 unabhängig von der Bewegung der Kolbenstange 3 über eine separate Achse 4a, die bei Kraftbeaufschlagung den Kolben in eine Richtung entgegen der Wirkkraft der Feder 6 verschiebt, so dass die Feder 6 vorgespannt wird (unterhalb der stichpunktierten Mittellinie dargestellt). Folglich kann das Prozessventil im Normalbetrieb mit einer geringeren Kraft auf die Kolbenstange 3 geöffnet werden, da die Federkraft nicht überwunden werden muss. Dies wird anhand der Positionen des äußeren Endes 3a der Kolbenstange 3 und des Mitnehmers 3d deutlich, die in der Endlage der Kolbenstange durchgezogen und bei Kraftbeaufschlagung der Kolbenstange 3 gestrichelt dargestellt sind. Man kann erkennen, dass der Mitnehmer 3d im Normalbetrieb nicht mit dem Kolben 4 in Berührung kommt. Entfällt die externe Kraftbeaufschlagung auf die Kolbenstange 3 und die Achse 4a, so expandiert die Feder 6 und drückt den Kolben 4 in Richtung der Stirnseite 1a des Gehäuses 1. Dabei kommt dieser an dem Mitnehmer 3d zur Auflage und bewegt somit die Kolbenstange 3 in ihre Endlage, in der sich ein mit der Kolbenstange 3 an ihrem Ende 3b verbundenes Prozessventil in einer sicheren Stellung befindet (oberhalb der strichpunktierten Mittellinie dargestellt).

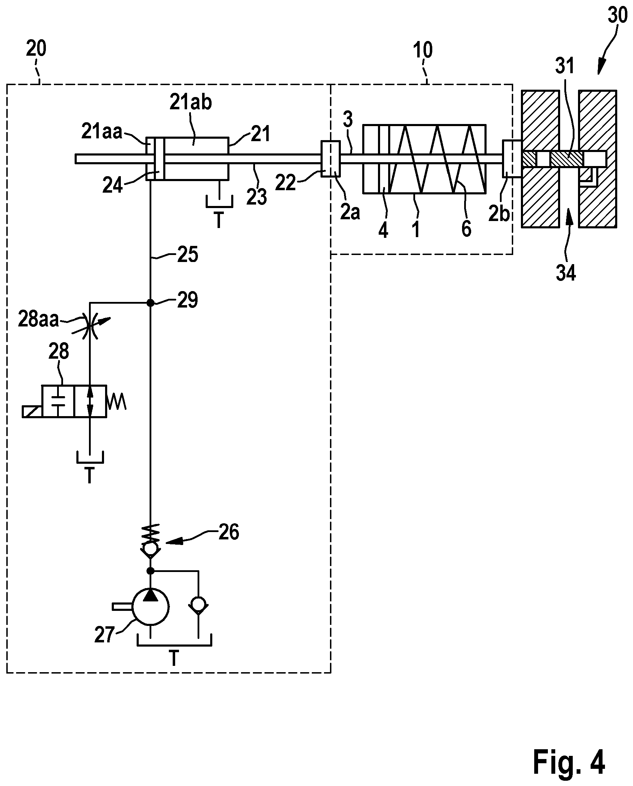

Figur 4 zeigt einen hydraulischen Schaltplan eines Linearaktors gemäß einer bevorzugten Ausführungsform des erfindungsgemäßen Systems. Das dargestellte System umfasst einen Linearaktor 20 und eine Sicherheitsvorrichtung 10, die mittels einer ersten mechanischen Schnittstelle 2a mit dem Linearaktor 20 verbunden ist. Dazu ist die erste mechanische Schnittstelle 2a der Sicherheitsvorrichtung 10 mit einer korrespondierenden Schnittstelle 22 des Linearaktors 20 gekoppelt. Zur Kopplung wird der Linearaktor 20 beispielsweise an der Sicherheitsvorrichtung mit ineinandergreifenden Schnittstellen 22, 2a angesetzt und um 45° gedreht. Auf einer der ersten Schnittstelle 2a gegenüberliegenden Seite (d.h. am Ende 3b) der Sicherheitsvorrichtung 10 ist eine zweite Schnittstelle 2b an der Sicherheitsvorrichtung 10 angeordnet, mittels derer diese mit einem Prozessventil 30 verbunden werden kann.

Das gezeigte Prozessventil 30 ist umfasst eine Scheibe 31, die in Folge einer Bewegung der Kolbenstange 3 der Sicherheitsvorrichtung 10 einen Ventilkanal 34 öffnet und schließt.

Der in Figur 4 gezeigte Linearaktor 20 enthält eine Pumpe 27, die Druckflüssigkeit aus einem Innenraum T des Linearaktors 20 über eine Leitung 25 in einen Arbeitsraum 21aa eines hydraulischen Zylinders 21 fördert. Der dargestellte hydraulische Zylinder 21 ist als Gleichgangzylinder ausgeführt und umfasst eine Kolbenstange 23, an der ein Kolben 24 befestigt ist. Der Kolben 24 grenzt den Arbeitsraum 21aa gegen einen zweiten Zylinderraum 21ab ab, der hydraulisch mit dem Innenraum des Linearaktors 20 verbunden ist. Zudem enthält der Linearaktor 20 ein Entlastungsventil 28, das ebenfalls über die Leitung 25 mit dem Arbeitsraum 21aa des hydraulischen Zylinders 21 verbunden ist. Figur 4 zeigt dabei die Stellung des hydraulischen Zylinders 21 bei geöffnetem Entlastungsventil 28, in der der Arbeitsraum 21aa minimale Größe hat, während der gegenüberliegende Zylinderraum 21ab maximale Größe hat.

Zwischen der Pumpe 27 und einem Anschluss 29 des Druckentlastungsventils 28 ist in der Leitung 25 ein Rückschlagventil 26 angeordnet, das ein Rückströmen der Druckflüssigkeit in die Pumpe 27 bei Entlastung des Arbeitsraums 21aa verhindert. Zudem befindet sich vor dem Druckentlastungsventil 28 eine variable Drossel 28aa, mit der eine Menge der aus dem Arbeitsraum 21aa strömender Druckflüssigkeit gesteuert/geregelt werden kann.

Wird das Entlastungsventil 28 geöffnet, so wirkt die Federkraft der Feder 6 der Sicherheitsvorrichtung 10 auf deren Kolben 4 und verschiebt - über die Kolbenstange 3 der Sicherheitsvorrichtung 10 und die Schnittstelle 2a, 22 zwischen der Sicherheitsvorrichtung 10 und dem Linearaktor 20 - die Kolbenstange 23 mit dem Kolben 24, bis der Arbeitsraum 21aa sein minimales Volumen erreicht hat. In diesem, in Figur 4 dargestellten Zustand befindet sich die Kolbenstange 3 mit dem Kolben 4 der Sicherheitsvorrichtung 10 in der vorbestimmten Position (Endlage) und der Ventilkanal 34 des Prozessventils 30 ist durch die Scheibe 31 verschlossen. Zweckmäßigerweise handelt es sich bei dem Entlastungsventil 28 um ein stromlos geöffnetes Ventil (NO, normally open), das bei Abfall der Steuerspannung öffnet.

Wird hingegen das Entlastungsventil 28 geschlossen und Druckflüssigkeit von der Pumpe 27 in den Arbeitsraum 21aa gefördert, wirkt die Kraft des hydraulischen Zylinders 21 gegen die Federkraft der Feder 6 der Sicherheitsvorrichtung 10, so dass die Feder 6 vorgespannt/zusammengedrückt wird. Die Kolbenstangen 23, 3 des Linearaktors 20 und der Sicherheitsvorrichtung 10 bewegen sich entgegen der Richtung der Federkraft und verschieben die damit verbundene Scheibe 31 des Prozessventils 30 derart, dass der Ventilkanal 34 geöffnet wird (nicht dargestellt).

Figur 5 zeigt ein Beispiel für eine mechanische Schnittstelle zwischen einem Linearaktor und einer Sicherheitsvorrichtung gemäß einer bevorzugten Ausführungsform des erfindungsgemäßen Systems im Längsschnitt. Auf der rechten Seite von Figur 5 ist ein Ausschnitt der Sicherheitsvorrichtung 10 dargestellt, der Teile der Kolbenstange 3, des Kolbens 4 und der Feder 6 sowie die dem Linearaktor 20 zugewandte Stirnseite 1a des Gehäuses 1 mit der ersten mechanischen Schnittstelle 2a zeigt. Die Schnittstelle 2a ist gemäß EN ISO 13628-8 als Schnellverschluss ("Linear (push) interface", Typ A oder Typ C) ausgeführt. Sie umfasst einen ersten Schaft 2aa, um den ein Flansch 2ab mit Aussparungen (nicht dargestellt) angeordnet ist. An dieser Schnittstelle 2a ist der Linearaktor 20 mittels des Schnittstelle 22, die das Gegenstück des Schnellverschlusses darstellt, angekoppelt. Der auf der linken Seite von Figur 5 dargestellte Ausschnitt des Linearaktors 20 zeigt neben der Schnittstelle 22 einen der Sicherheitsvorrichtung 10 zugewandten Teil des hydraulischen Zylinders 21 mit der Kolbenstange 23. Die Schnittstelle 22 des Linearaktors 20 umfasst einen zweiten Schaft 22aa mit klauenförmigen Vorsprüngen 22ab in Art eines Innenflansches, die den Flansch 2ab der Sicherheitsvorrichtung 10 umgreifen. Um den Linearaktor 20 mit der Sicherheitsvorrichtung 10 zu verbinden, werden die klauenförmigen Vorsprünge 22ab in axialer Richtung in die Aussparungen (nicht gezeigt) des Flansches 2ab eingeschoben und durch Drehung des Linearaktors 20 um 45° im Uhrzeigersinn mit dem Flansch 2ab in Eingriff gebracht. Damit liegen in dem in Figur 5 gezeigten geschlossenen Zustand des Schnellverschlusses 2a, 22 die klauenförmige Vorsprünge 22ab axial und radial an dem Flansch 2ab des ersten Schafts an, so dass eine formschlüssige Verbindung der beiden Seiten des Schnellverschlusses 2a, 22 hergestellt wird. Aufgrund dieser Verbindung mittels des Schnellverschlusses 2a, 22 sind die gegenüberliegenden Enden der Kolbenstangen 23, 3 des Linearaktors 20 und der Sicherheitsvorrichtung 10 kraftschlüssig miteinander verbunden.

Der Schnellverschluss 2a, 22 ermöglicht es insbesondere, den Linearaktor 20 mit einem ROV zu tauschen, ohne dass die Sicherheitsvorrichtung ausgebaut oder geöffnet werden muss. Dies führt zu einer deutlichen Vereinfachung bei der Wartung und Montage des Linearaktors, insbesondere in großen Tiefen.

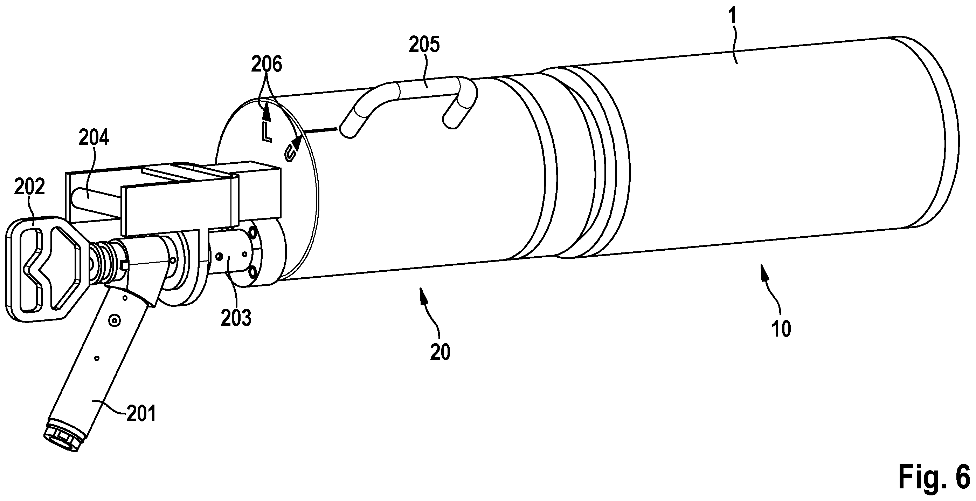

Figur 6 zeigt einen Linearaktor und eine Sicherungsvorrichtung gemäß einer bevorzugten Ausführungsform des erfindungsgemäßen Systems in einer räumlichen Außenansicht. In dieser Figur sind der Linearaktor 20 und die Sicherungsvorrichtung 10 mittels des Schnellverschlusses 2a, 22, wie in Figur 5 gezeigt, verbunden. An der Außenseite des Linearaktors 20 sind standardisierte Griffe 202, 204, 205 für die Montage/Demontage des Linearaktors 20 mittels eines ROV angebracht.

Zudem befindet sich an der Stirnseite des Linearaktors 20 eine Kabelführung 201, die zu einer Steckverbindung 203 führt, an der die Stromversorgung für ein elektronisches Steuergerät 40, die elektrische Antriebseinheit 41 und die Ventile 28, 28a angeschlossen ist.

Weiters ist auf der Stirnseite des Linearaktors eine Anzeigevorrichtung 206 (schematisch dargestellt) angeordnet, welche die Position des Kolbens 24, 4 und/oder der Kolbenstange 23, 3 des Linearaktors 20 und der Sicherheitsvorrichtung 10 anzeigt. Gemäß Figur 6 befindet sich die Anzeigevorrichtung in der Stellung U ("unlocked"), d. h. das System aus Linearaktor 20 und Sicherheitsvorrichtung 10 befindet sich in einem normalen Betriebszustand, in dem der Arbeitsraum 21aa des hydraulischen Zylinders 21 druckbeaufschlagt ist und sein maximales Volumen einnimmt, so dass weder der Kolben 24 des hydraulischen Zylinders noch der Kolben 4 an ihren Endanschlägen anliegen (vgl. Figur 4).

Der Griff 202 erlaubt es dem ROV, die elektrische Verkabelung des Linearaktors 20 an der Steckverbindung 203 zu trennen. Damit wird die Stromversorgung der Pumpe 27 und des Entlastungsventils 28 unterbrochen, so dass das Entlastungsventil 28 öffnet und der Druck im Arbeitsraum 21aa des hydraulischen Zylinders 21 abfällt. Demzufolge werden die Kolben 4, 24 der Sicherheitsvorrichtung 10 und des Linearaktors 20 durch die Federkraft der Feder 6 in ihre jeweiligen Endanschläge geschoben (vgl. Figur 4) und die Anzeigevorrichtung wechselt auf die Stellung L ("locked").

Nachfolgend kann das ROV mittels des Griffs 204 und des Schnellverschlusses 2a, 22 (vgl. Figur 5) den Linearaktor 20 durch eine Drehung um 45° gegen den Uhrzeigersinn von der Sicherungsvorrichtung 10 trennen. Der Griff 205 kann nachfolgend zum Transport des Linearaktors 20 verwendet werden.

Die Erfindung stellt eine kompakte und einfache Sicherheitsvorrichtung für linear betätigte Prozessventile als separates Modul bereit, das über rein mechanische Eigenschaften verfügt. Die Sicherheitsvorrichtung bietet einen sehr einfachen und kompakten Fail-Safe-Mechanismus, der auf bewährten Federn basiert und keinen elektrischen, pneumatischen oder hydraulischen Antrieb benötigt. Durch die Federkraft der mindestens einen Feder in der Sicherheitsvorrichtung wird das Prozessventil automatisch in eine vorher definierten Position (z.B. geöffnet oder geschlossen) gebracht, wenn die Betätigungskraft abfällt (z.B. beim Fehler eines Antriebs, Stromausfall, Deaktivierung oder Ausbau des Aktuators). Der modulare Aufbau der Komponenten, der die Sicherheitsvorrichtung getrennt von einem Linearaktor vorsieht, kann zur Vereinfachung der Konstruktion neuer oder zur Nachrüstung bestehender Anlagen genutzt werden.

## Patentansprüche

1. Sicherheitsvorrichtung (10) für ein linear betätigtes Prozessventil (30) umfassend ein Gehäuse (1);
eine Kolbenstange (3), die in dem Gehäuse (1) linear verschiebbar gelagert und mit dem Prozessventil verbindbar ist;
ein Kolben (4), der mit der Kolbenstange (3) verbunden ist;
mindestens eine Feder (6), die zwischen dem Kolben (4) und einer Stirnseite (1b) des Gehäuses (1) eingespannt ist,
eine erste mechanische Schnittstelle (2, 2a), mittels derer die Sicherheitsvorrichtung (10) mit einem Linearaktor (20) lösbar verbindbar ist, **dadurch gekennzeichnet, dass** die Sicherheitsvorrichtung eine Druckkompensationsvorrichtung (7) umfasst, die dazu eingerichtet ist, einen Druckausgleich zwischen einer Umgebung und einem Innenraum der Sicherheitsvorrichtung (10) zu bewirken, wobei die Druckkompensationsvorrichtung (7) in der Kolbenstange (3) angeordnet ist.

2. Sicherheitsvorrichtung (10) gemäß Anspruch 1, mit einem Vorspannmittel, welches dazu eingerichtet ist die mindestens eine Feder (6) unabhängig von einer Bewegung der Kolbenstange (3) vorzuspannen.

3. Sicherheitsvorrichtung (10) gemäß einem der vorstehenden Ansprüche, wobei das Gehäuse (1) mit einer Druckflüssigkeit gefüllt ist.

4. Sicherheitsvorrichtung (10) gemäß einem der vorstehenden Ansprüche, wobei die Druckkompensationsvorrichtung (7) dazu eingerichtet ist, einen Druck im Innenraum der Sicherheitsvorrichtung (10) in einem Bereich zwischen Umgebungsdruck und 10 bar oberhalb des Umgebungsdrucks einzustellen.

5. Sicherheitsvorrichtung (10) gemäß einem der vorstehenden Ansprüche ferner umfassend eine zweite mechanische Schnittstelle (2b), mittels derer die Sicherheitsvorrichtung (10) mit dem Prozessventil (30) oder einer weiteren Sicherheitsvorrichtung (10) verbindbar ist.

6. Sicherheitsvorrichtung (10) gemäß einem der vorstehenden Ansprüche ferner umfassend
mindestens einen Sensor, der dazu eingerichtet ist, die Position des Kolbens (4) und/oder der Kolbenstange (3) zu detektieren, und
eine Anzeigevorrichtung, die dazu eingerichtet ist, die Position des Kolbens (4) und/oder der Kolbenstange (3) auf einer Außenseite des Gehäuses (1) anzuzeigen.

7. System zur linearen Betätigung eines Prozessventils (30) umfassend
mindestens einen Linearaktor (20); und
eine oder mehrere Sicherheitsvorrichtungen (10) gemäß einem der vorstehenden Ansprüche, wobei die eine oder eine der mehreren Sicherheitsvorrichtungen (10) mittels der ersten mechanischen Schnittstelle (2, 2a) mit dem Linearaktor (20) verbunden ist.

8. System gemäß Anspruch 7, mit mehreren Sicherheitsvorrichtungen (10), die in Reihe geschaltet sind.

## Claims

1. Safety device (10) for a linearly activated process valve (30), comprising a housing (1);
a piston rod (3) which is mounted so as to be linearly displaceable in the housing (1) and is connectable to the process valve;
a piston (4) which is connected to the piston rod (3);
at least one spring (6) which is clamped between the piston (4) and an end face (1b) of the housing (1),
a first mechanical interface (2, 2a) by means of which the safety device (10) is releasably connectable to a linear actuator (20), **characterized in that** the safety device comprises a pressure compensation device (7) which is specified to effect pressure equalization between an environment and an interior of the safety device (10), wherein the pressure compensation device (7) is disposed in the piston rod (3).

2. Safety device (10) according to Claim 1, having a pre-loading means which is specified to pre-load the at least one spring (6) independently of a movement of the piston rod (3).

3. Safety device (10) according to one of the preceding claims, wherein the housing (1) is filled with a pressurized liquid.

4. Safety device (10) according to one of the preceding claims, wherein the pressure compensation device (7) is specified to set a pressure in the interior of the safety device (10) in a range between ambient pressure and 10 bar above ambient pressure.

5. Safety device (10) according to one of the preceding claims, furthermore comprising a second mechanical interface (2b) by means of which the safety device (10) is connectable to the process valve (30) or to a further safety device (10).

6. Safety device (10) according to one of the preceding claims, furthermore comprising
at least one sensor which is specified to detect the position of the piston (4) and/or of the piston rod (3), and
a display device which is specified to indicate the position of the piston (4) and/or piston rod (3) on an exterior of the housing (1).

7. System for linearly activating a process valve (30), comprising at least one linear actuator (20); and
one or a plurality of safety devices (10) according to one of the preceding claims, wherein the one safety device, or one of the plurality of safety devices (10), is connected to the linear actuator (20) by means of the first mechanical interface (2, 2a).

8. System according to Claim 7, comprising a plurality of safety devices (10) which are connected in series.

## Revendications

1. Dispositif de sécurité (10) pour une soupape de traitement (30) à actionnement linéaire, comprenant
un boîtier (1) ;
une tige (3) de piston, qui est montée de manière à pouvoir coulisser linéai-rement dans le boîtier (1) et peut être reliée à la soupape de traitement ;
un piston (4), qui est relié à la tige (3) de piston ;
au moins un ressort (6), qui est serré entre le piston (4) et un côté frontal (1b) du boîtier (1),
une première interface mécanique (2, 2a), au moyen de laquelle le dispositif de sécurité (10) peut être relié de manière amovible à un actionneur linéaire (20), **caractérisé en ce que** le dispositif de sécurité comprend un dispositif de compensation de pression (7), qui est mis au point pour entraîner une compensation de pression entre un environnement et un espace intérieur du dispositif de sécurité (10), le dispositif de compensation de pression (7) étant disposé dans la tige (3) de piston.

2. Dispositif de sécurité (10) selon la revendication 1, avec un moyen de précontrainte, qui est mis au point pour précontraindre l'au moins un ressort (6) indépendamment d'un déplacement de la tige (3) de piston.

3. Dispositif de sécurité (10) selon l'une des revendications précédentes, le boîtier (1) étant rempli d'un liquide sous pression.

4. Dispositif de sécurité (10) selon l'une des revendications précédentes, le dispositif de compensation de pression (7) étant mis au point pour régler une pression à l'intérieur du dispositif de sécurité (10) dans une plage entre la pression ambiante et 10 bar au-dessus de la pression ambiante.

5. Dispositif de sécurité (10) selon l'une des revendications précédentes, comprenant en outre une deuxième interface mécanique (2b), au moyen de laquelle le dispositif de sécurité (10) peut être relié à la soupape de traitement (30) ou à un autre dispositif de sécurité (10).

6. Dispositif de sécurité (10) selon l'une des revendications précédentes, comprenant en outre
au moins un capteur, qui est mis au point pour détecter la position du piston (4) et/ou de la tige (3) de piston, et
un dispositif d'affichage, qui est mis au point pour afficher la position du piston (4) et/ou de la tige (3) de piston sur un côté extérieur du boîtier (1).

7. Système d'actionnement linéaire d'une soupape de traitement (30) comprenant
au moins un actionneur linéaire (20) ; et
un ou plusieurs dispositifs de sécurité (10) selon l'une des revendications précédentes, le ou l'un des plusieurs dispositifs de sécurité (10) étant reliés à l'actionneur linéaire (20) au moyen de la première interface mécanique (2, 2a).

8. Système selon la revendication 7 avec plusieurs de dispositifs de sécurité (10), qui sont connectés en série.
